(19)

Europäisches
Patentamt
European
Patent Office
Office européen
des brevets

(11) **EP 2 530 875 A1**

(12) **EUROPEAN PATENT APPLICATION**

(43) Date of publication:
 **05.12.2012 Bulletin 2012/49**

(51) Int Cl.:
*H04L 12/26* (2006.01)     *H04L 12/24* (2006.01)

(21) Application number: **11290250.7**

(22) Date of filing: **01.06.2011**

| | |
|---|---|
| (84) Designated Contracting States:<br> **AL AT BE BG CH CY CZ DE DK EE ES FI FR GB**<br> **GR HR HU IE IS IT LI LT LU LV MC MK MT NL NO**<br> **PL PT RO RS SE SI SK SM TR**<br> Designated Extension States:<br> **BA ME**<br><br>(71) Applicant: **Alcatel Lucent**<br> **75007 Paris (FR)** | (72) Inventors:<br> • **Gacanin, Haris**<br>   **2600 Antwerp (BE)**<br> • **Pizurica, Veselin**<br>   **9052 Gent (BE)**<br><br>(74) Representative: **D'Halleweyn, Nele Veerle Trees**<br> **Gertrudis et al**<br> **Arnold & Siedsma**<br> **Sweelinckplein 1**<br> **2517 GK Den Haag (NL)** |

(54) **Method for monitoring quality parameters in a customer premises network**

(57) The invention relates to a method for monitoring customer network parameters relating to quality of service in a customer network. The network comprises a gateway having links to multiple local access network devices. In the method a value (M1 or M2 or ...) for a quality of service parameter is determined for a selected number of links (121,122,...,128). Further a predetermined value (E1 or E2 or ...) for the (expected) quality of service parameter is provided. The method further comprises calculating a quality of service indicator (link identification metric or LIM) for the selected number of links (121, ..., 128) using the determined and predetermined values {(M1,E1) }.

FIG. 1

EP 2 530 875 A1

## Description

### Field of Invention

The present invention pertains to a method of monitoring quality parameters, such as quality of service and/or quality of experience, in a customer premises network.

### Background

Customer premises networks have been seen as the customer's responsibility since the physical wiring is within the customers premises. However, to establish customer loyalty while increasing revenue, service/network providers must quickly and efficiently correct any problems that surface inside the home network as well. To satisfy customer expectations the operators must deliver broadband services with no interference from other traffic. In particular, the service quality is the main issue in gaining the customers trust.

When faced with obvious service quality issues (usually reported by customer) the operators will dispatch their technicians to pinpoint the source of the problem and possible solution.

The communication infrastructure is increasingly used for information sharing, for example media content sharing, video conferencing with remote participants, etc.

### Summary

The invention is based on the insight that network devices in multiple locations wish to access "heavy-load" content using peer-to-peer architecture resulting more often in unexpected lowered quality of service.

It is therefore an object of the present invention to provide a method that allows reducing the costs for operators and allows pinpointing the source of loss of the quality of service.

In a first aspect of the present invention, there is provided a method for monitoring customer network parameters relating to quality of service in a customer network comprising a gateway having links to multiple devices at the LAN side. The LAN network devices can be connected through different mediums to the gateway.

According to the invention the method comprises for a selected number of links:

- determining a value for a quality of service parameter for the link;
- providing a predetermined value for the (expected) quality of service parameter for the link; and
- calculating a quality of service indicator (link identification metric or LIM) for the selected number of links using the determined and predetermined values.

According to the method the quality of service is checked for several links in the customer premises network. The present invention is based on the insight that quality of service for a specific link is dependent also on the quality of service of other links in the same network.

The quality of service parameters can be determined for the links. The quality of service parameter can be one or more parameters from a list physical-layer and network statistic parameters. Examples of quality of service parameters are:

- average rate
- bit error rate
- signal-to-noise ratio
- channel gain
- device ID
- network ID

The indicator or link identification metric (LIM) allows collecting the quality of service and can be used as a agnostic service parameter. The LIM can be calculated for each of the selected links.

In order to compare the determined value of the quality of service parameter with a network property the respective expected value for that quality of service parameter for that specific link is used. The expected predetermined values are available in different standards (e.g., IEEE, ITU, etc.). The values can be fixed values in a memory connected to the customer premises network. In an embodiment the expected values are set by and are available from a domain master node having a memory comprising the expected value for the specific link with the network device. The value can e.g. be dependent on the exchange protocol between a domain master node and the network device.

The method according to the invention allows diagnosing the quality of service in a customer premises network. The method allows automating the method. Further the method allows taking into account the influence of other links in the customer premises network to explain certain loss of quality, specifically temporary losses as a result of an overload in capacity.

In an embodiment the selected number of links comprises each link in the customer network. This will allow a complete analysis of the customer premises network. The combined information regarding the multiple, and preferably all, links, can be combined in a single collection of indicators. The collection of LIM's can be indicated by $LIM_{A1-An}$ for each link A1, A2, A3 - An.

In an embodiment values and predetermined values for multiple quality of service parameters for the link(s) are determined and provided respectively. By collecting several parameters a more detailed analysis is possible of a problem in the network. This allows collecting several indicators which together can be used to determine a quality of experience of the link(s)/at the one or more users.

In an embodiment the quality of service indicator (LIM) comprises a set of rations of each determined and predetermined values for quality of service parameters. The indicator becomes a single set of values that can be used as an agnostic service parameter for the links and for the network as a whole.

In an embodiment the LIM values for a network are collected and saved over time allowing a historic overview of the quality of experience of a user in the network and allowing to track the possible origin of the problem experience by the user.

In an embodiment the measured respective values for respective quality of service parameters can be identified by M1, M2, M3, ... Mn. When the parameters are followed in time, M1 and M1' can show the result of different measurements at different time moments for the values for the quality of service parameters. The combined measured values in time can be indicated by the following set for a link A:

{ (M1, M1', M1'', ...), { (M2, M2', M2'', ...), { (M3, M3', M3'', ...) ... (Mn, Mn', Mn'', ...) }$_A$

In an embodiment the predetermined values of quality of service parameters can be identified by the set {E1, E2, E3, ... , En} with E1, E2, E3, ... , En formed by an expected value e.g. being predefined in a standard, for a respective quality of service parameter.

Other parameters relating to quality of service that can be included in the method and that could be included in the indicator are list of devices, list of neighbor devices, list of device ID's list of available neighboring networks and indication of presence. These parameters can be added to the indicator to further allow identification of problems.

In an embodiment calculating the quality of service indicator (link identification metric, LIM) comprises taking ratios of the determined and predetermined values. A ratio of a determined value over the predetermined value will provide a calibrated indication of the functionality of a certain link. Examples of ratios that can be a part of the LIM are: average rate over expected rate and/or measured bit error rate over expected bit error rate. In an embodiment the LIM is formed by { (M1, M1', M1'', ...) / E1, { (M2, M2', M2'', ...) / E2, { (M3, M3', M3'', ...) / E3, ..., (Mn, Mn', Mn'', ...) / En}.

In an embodiment the gateway transmits the values and predetermined values for the quality of service to a remote network analyzer connected to the gateway outside the home network. In an embodiment the gateway transmits the calculated indicators for the quality of service to a remote network analyzer connected to the gateway outside the home network. This will allow to externally determine a problem in the customer premises network. The provider is now able to answer a question from a customer relating to the customer premises network, e.g. when the customer calls.

In an embodiment the network analyzer communicates with the gateway using a TR-069 protocol exchange.

In an embodiment the indicator(s) for the quality of service for the link is calculated at the network analyzer. In an embodiment the indicator(s) for the quality of service for the link is calculated at the gateway.

In an embodiment the value for the quality of service parameter for the link is determined at the gateway.

In an embodiment the indicator(s) are stored at a server. In an embodiment the method is repeated at predetermined intervals. By repeating the method and storing the indicator values, it is possible to create a historic overview of the network performance.

According to another aspect of the present invention, there is provided a computer program configured for carrying out the method as described above.

According to another aspect of the present invention, there is provided a network analyzer for use in the method as described above.

**Brief Description of the Figures**

An embodiment of the method in accordance with the present invention is now described, by way of example only, and with reference to the accompanying drawings:

Figure 1 illustrates an embodiment of a network in which the invention may be used advantageously;
Figure 2 shows schematically an interpretation of a first embodiment of the LIM; and
Figure 3 shows a schematic diagram for the steps of an embodiment of the method according to the invention.

**Description of Embodiments**

The skilled person will understand that any references to a home network in the present description are strictly exemplary and not intended to limit the scope of application of the present invention to residential settings. The invention is in fact also applicable to other settings in which an access link and a local area network link are present, including office, industry, hospitality, and educational settings.

The number of transceivers shown in the figures is chosen for illustrative purposes only, and does not limit the generality of the invention in any way. Operations described in relation to a given transceiver may apply, *mutatis mutandis,* to other transceivers in the network.

The home networks have been seen as the customer's responsibility since the physical wiring is within the customers premises. However, to establish customer loyalty while increasing revenue, service/network providers must quickly and efficiently correct any problems that surface inside the home network as well. To satisfy customer expectations the operators must deliver broadband services with no interference from other traffic. In particular, the service quality is the main issue in gaining the customers trust.

When faced with obvious service quality issues (usually reported by customer) the operators will dispatch their technicians to pinpoint the source of the problem and possible solution.

Thus, the main technical problem is to enable service assurance within the home network and allow service/network operators to take actions before the customer calls the help desk.

Currently, only manual service assurance, by operator's technicians is possible for in-house networks. This type of service assurance diagnostic is a reaction to the customer complains which triggers the dispatch of technicians to investigate the problems. This procedure is very time consuming and highly costly. Thus, a more proactive automatic service diagnostics method is our goal.

The present invention is *inter alia* based on the insight that it is advantageous to summarize the quality of services in a single indicator.

Our aim is to propose a new diagnostics method to localize faults within home network environment in automated fashion. In particular, this invention is valuable for G.hn home networking deployments.

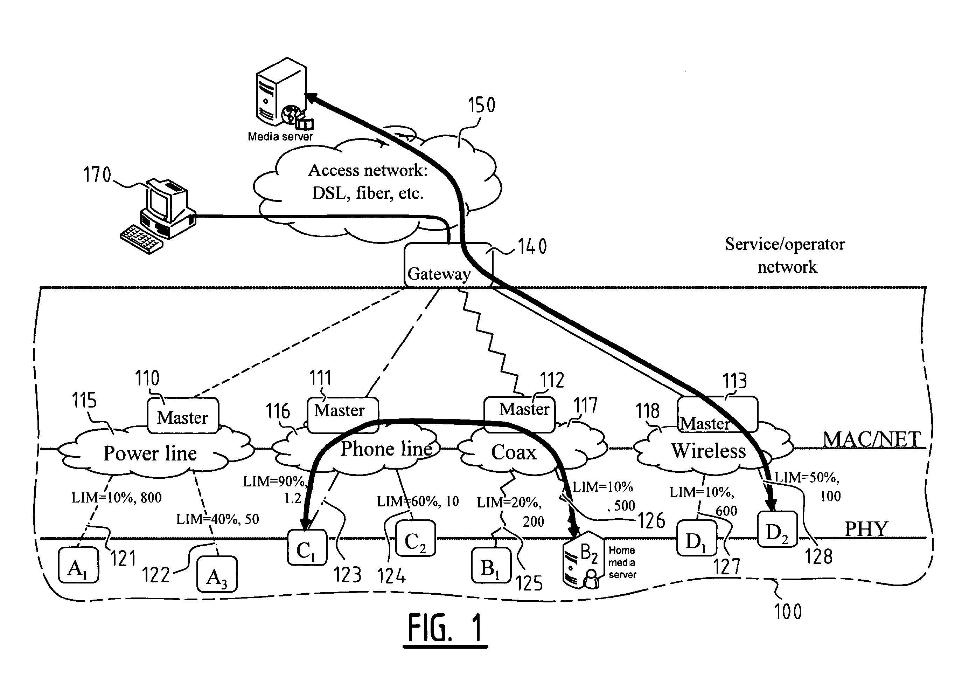

The new method will enable efficient service assurance of home networks, where the simplified home network architecture over different mediums (power lines, wireless, coax and phone lines) is illustrated in Fig. 1.

Figure 1 conceptually illustrates how the method of the present invention may be carried out in part or completely from outside the home network. A network analyzer 170 is operatively connected to a gateway 140 and the customer premises equipment 100 preferably by means of a remote configuration protocol. In applicable cases, TR-069 may be used as the remote configuration protocol. Although the connection network analyzer 170 and customer premises equipment 100 is shown as via a network or 'cloud' 150, a direct connection is also possible.

Without loss of generality, the customer premises equipment 100 comprises a several master nodes 110-113. In this embodiment each master node 110-113 serves a local area network at the customer premises using a different medium. Master node 110 uses power lines, master node 111 uses phone lines, master node 112 uses coax cables, and master node 113 forms the switch to a wireless local area network.

Each of the local networks 115-118 can comprise one or more network devices A1,A3, C1,C2, B1, a home media server B2, D1 and D2.

In order to carry out an embodiment of the method of the present invention, the customer premises equipment 100 may be instructed by the network analyzer 170 to selectively activate a transceiver in the gateway 140.

The gateway 140 acts as a proxy for the other LAN transceivers. For this purpose, the gateway 140 may be required to relay management messages from and to the network analyzer 170, optionally translating between the protocol used by the network analyzer 170 (e.g., TR-069) and a different management protocol used inside the LAN.

According to an embodiment of the invention the method allows service assurance by evaluating different independent links between the gateway (GW) and the network devices A1-D2. The gateway 140 communicates with the network device A1-D2 from a particular domain 115-118 via its master node 110-113.

In an embodiment the gateway provide the network parameter information such as the value of a particular quality of service parameter relating to a specific link with one of the network device to the remote server. Moreover, the remote server is able to access the parameters and initiate the measurements of the network status parameters.

The customer premises network 110 is increasingly used for information sharing, for example media content sharing, video conferencing with remote participants, etc. Increasingly network devices A1-D2 in multiple locations will wish to access media server content. Peer-to-peer architecture will be used. Figure 1 shows an example comprising two media servers. Media server 180 is located in the internet domain (e.g., within the operator network). Media server B2 is a server within the home network 100. Other different services such as HDTV, Triple play, etc., could also be accessed over the network creating traffic over the different mediums 115-118.

In an embodiment the link identification metric (LIM) is defined as an indicator that defines the link quality level for a selected group, but preferably for each of the network devices A1-D2. The links shown in Figure 1 are links 121-128.

In this description 121 - 128 refers to each link, while 121,122,...,128 refers to one or several links. In this description the combination (M1,E1) or the set of combinations {(M1,E1), (M2,E2), ... (Mn,En)} refers to a indicator based on a measured value and an expected value.

In an embodiment LIM is defined as **LIM**=$\{\alpha,\beta\}$, where $\alpha$ and $\beta$ are defined as

$$\begin{cases} \alpha = \left.\dfrac{AverageRate}{ExpectedRate}\right|_{per\ medium} \\ \beta = \left.\dfrac{MeasuredBER}{ExpectedBER}\right|_{per\ medium} \end{cases}$$

Thus, based on determined/measured and predetermined/expected parameters the corresponding LIM is created and can be used as agnostic service parameter.

Moreover, LIM can be defined by other physical-layer and network statistic parameters such as signal-to-noise ratio (SNR), channel gain, list of devices, list of neighbour devices, list of device ID's, list of available neighbouring networks and indication of presence.

Based on the values of $\alpha$ and $\beta$ the LIM service parameter can be used to identify the link quality each of the links and for the different media services as illustrated in Fig. 1.

In the example illustrated in figure 1, $\alpha$ indicator is given in percent, while $\beta$ indicator is a number larger than 0. For the $\alpha$ ratio forming an indication of the average rate, a value above 60% would be an indication for a good link. For the bit rate error is can be assumed that values of $0 < \beta \approx 1$ indicate good link conditions, while values of $\beta >> 1$ indicate poor link conditions.

Thus in this embodiment, in the case of poor LIM indicator (e.g., LIM={10%, 800} for network device A1 using link 121) some network segments belonging to a particular medium can be identified as "poor service link". On the other hand, for links with good LIM indicator (e.g., LIM={90%, 1.2} ) some network device C1 using link 123 belonging to a particular medium 116 can be identified as 'high service link'.

Network analyzer 170 can collect LIM indicators for both locations of the media streaming server. Service assurance and diagnostics can be made remotely within the home network.

The remote server 170 can calculate the LIM indicator from the provided values from the gateway 140. The calculated (set of) indicator values can be stored to identify the potential links with good quality and enable services with high data rate profiles such as HDTV for example.

By using LIM indicators, it is also possible to illustrate the network behavior and thus, the network operator can suggest potential actions to the customers.

The LIM calculator may reside within a customer premises, e.g. as part of the gateway 140. In that embodiment the LIM calculator can integrate both the DSL and the home network chips.

In another embodiment the LIM calculator is part of the remote server 170 in the access operator's network that talks to the in-home devices, e.g. through the TR-069 protocol. This protocol could allow the configuration of the overall transmit power, and certain aspects of the shape of the PSD, such as the application of spectral notches, amongst other things.

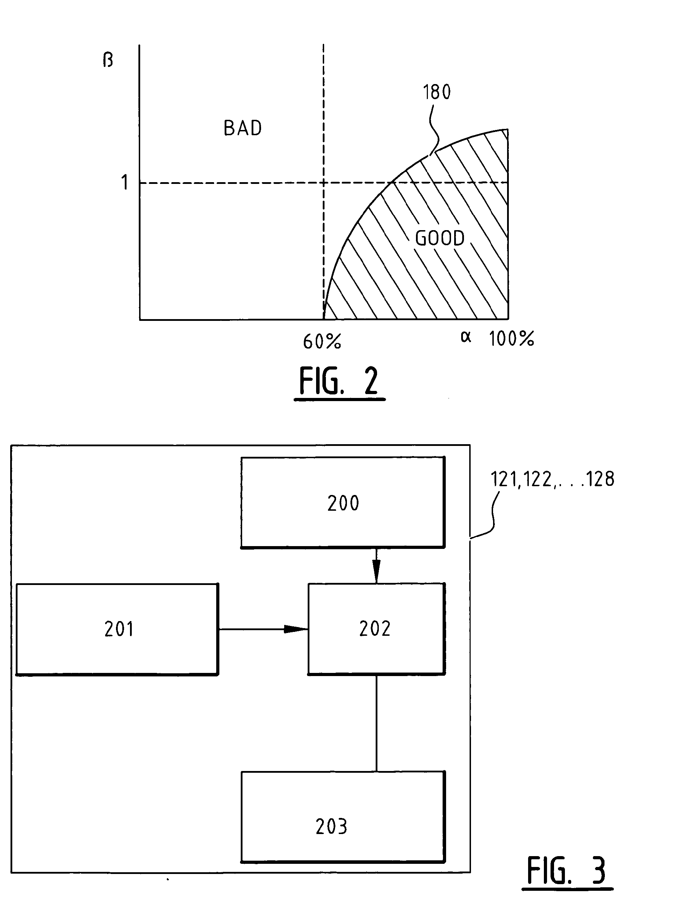

Figure 2 is a schematic illustration of two dimensional interpretation of the LIM 'translated' to a good or bad experience for the user. The x-axis is formed by $\alpha$, while $\beta$ is indicated on the y-axis. The shadowed area under curve 180 shows the field for the LIM indicator for respective links that corresponds to a good link experience by the user.

The good / bad experience can be indicated to the operator or user by a green / red color and forms a summary for the experience by the user. The user can be provided with the results of several, preferably all, links in the network, allowing to identify a possible cause of the problem experienced in the network.

As will be clear to the skilled person, the two dimensional space of Figure 2 can be expanded into a three or multi dimensional space if more measured and expected quality of service parameters are taken into account.

Figure 3 illustrates an embodiment of the method according to the invention. At step 200 at least one value M1, M2, ..., Mn for a quality of service parameter is measured. The expected value E1, E2, ..., En is e.g. available from a memory 201. The determined and predetermined values are combined in step 202 for each available value into a set {(M1,E1), (M2,E2), ... (Mn,En) } forming the indicator (LIM). The combining preferably comprises taking the ratio. The set is exported to a FIFO memory in step 203 in order to obtain a historic overview of the set allowing problem analysis.

The method 200-203 can be performed for several (121,122,...,128), preferably all (121-128) links of the network. By collecting several LIM's for several links, an analysis of (a part of) the network is possible.

The method can be performed at the client and can be made available directly at the client. In an embodiment part of the method is performed at the network analyzer 170 or gateway 140.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS.

are conceptual only. Their function may be carried out through the operation of program logic, through dedicated logic, through the interaction of program control and dedicated logic, or even manually, the particular technique being selectable by the implementer as more specifically understood from the context.

**Claims**

1. A method for monitoring customer network parameters relating to quality of service in a customer network comprising a gateway having links to multiple local access network devices, said method comprising for a selected number of links (121,122,...,128):

   - determining a value (M1 or M2 or ...) for a quality of service parameter for the link;
   - providing a predetermined value (E1 or E2 or ...) for the quality of service parameter for the link; and
   - calculating a quality of service indicator (LIM) for the selected number of links (121, ..., 128) using the determined and predetermined values {(M1,E1) }.

2. Method according to claim 1, wherein the selected number of links comprise each link (121-128) in the customer network.

3. Method according to claim 1 or 2, wherein values and predetermined values for multiple quality of service parameters (M1, M2, ..., Mn) for the link(s) (121, ..., 128) are determined and provided respectively.

4. Method according to claim 3, wherein the quality of service indicator (LIM) comprises a set of values for each quality of service parameter { (M1,E1), (M2,E2), ... (Mn,En) }.

5. Method according to any of the preceding claims, wherein calculating the quality of service indicator (link identification metric, LIM) comprises taking ratios of the determined and predetermined values.

6. Method according to any of the preceding claims, wherein the value for the quality of service parameter for the link is determined at the gateway.

7. Method according to any of the preceding claims, wherein the gateway transmits the values for the quality of service to a remote network analyzer connected to the gateway outside the home network.

8. Method according to claim 6 or 7, wherein the indicator(s) for the quality of service for the link is determined at the network analyzer.

9. Method according to claim 8, wherein the network analyzer is integrated into gateway.

10. Method according to claim 7, 8 or 9, wherein said network analyzer communicates with the gateway using a TR-069 protocol exchange.

11. Method according to any of the preceding claims, wherein the indicator(s) (M1, M1', M1'',... and E1) are stored at a server.

12. Method according to any of the preceding claims, wherein the method is repeated at predetermined intervals.

13. A computer program configured for carrying out the method of any of the preceding claims.

14. A network analyzer for use in the method of claim 7, 8 or 9.

FIG. 1

FIG. 2

FIG. 3

Europäisches
Patentamt

European
Patent Office

Office européen
des brevets

**EUROPEAN SEARCH REPORT**

Application Number

EP 11 29 0250

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | TOM STARR AT&T LABS USA VERNON REED AT&T LABS USA: "G.hn Management and Diagnostics Specifications;C 807", ITU-T DRAFTS ; STUDY PERIOD 2009-2012, INTERNATIONAL TELECOMMUNICATION UNION, GENEVA ; CH, vol. Study Group 15 ; 4/15, 16 May 2010 (2010-05-16), pages 1-12, XP017447504, [retrieved on 2010-05-16] * the whole document * ----- | 1-14 | INV. H04L12/26 H04L12/24 |
| X | WO 2005/094001 A1 (TELECOM ITALIA SPA [IT]; MAGNONE LORENZO [IT]; COVINO GIUSEPPE [IT]) 6 October 2005 (2005-10-06) * page 3, line 12 - page 5, line 27 * * page 10, line 6 - page 11, line 6 * * page 15, line 17 - page 17, line 25 * * page 22, line 26 - page 23, line 12 * * page 29, line 14 - line 20; figures 1-5 * ----- | 1-12 | |
| A | WO 2006/026262 A2 (STREAMAWARE LLC [US]; MCLANE BRIAN R [US]; CHENARD JESSE [US]) 9 March 2006 (2006-03-09) * page 1, line 26 - page 4, line 17 * ----- | 1-3,13, 14 | TECHNICAL FIELDS SEARCHED (IPC) H04L |

The present search report has been drawn up for all claims

| Place of search | Date of completion of the search | Examiner |
|---|---|---|
| Munich | 7 October 2011 | Ceccarini, Giulio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 530 875 A1

### ANNEX TO THE EUROPEAN SEARCH REPORT
### ON EUROPEAN PATENT APPLICATION NO.

EP 11 29 0250

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2011

| Patent document cited in search report | | Publication date | Patent family member(s) | | Publication date |
|---|---|---|---|---|---|
| WO 2005094001 | A1 | 06-10-2005 | CN | 1926805 A | 07-03-2007 |
| | | | EP | 1728357 A1 | 06-12-2006 |
| | | | IL | 177943 A | 30-12-2010 |
| | | | JP | 4638479 B2 | 23-02-2011 |
| | | | JP | 2007531367 A | 01-11-2007 |
| | | | US | 2007286084 A1 | 13-12-2007 |
| WO 2006026262 | A2 | 09-03-2006 | AU | 2005280213 A1 | 09-03-2006 |
| | | | CA | 2580753 A1 | 09-03-2006 |
| | | | EP | 1807974 A2 | 18-07-2007 |
| | | | JP | 2008512050 A | 17-04-2008 |
| | | | KR | 20070083597 A | 24-08-2007 |

For more details about this annex : see Official Journal of the European Patent Office, No. 12/82